(19) Europäisches Patentamt / European Patent Office / Office européen des brevets

(11) **EP 3 544 248 B1**

(12) **EUROPEAN PATENT SPECIFICATION**

(45) Date of publication and mention
of the grant of the patent:
**19.02.2025 Bulletin 2025/08**

(21) Application number: **18305305.7**

(22) Date of filing: **20.03.2018**

(51) International Patent Classification (IPC):
***H04L 25/03*** *(2006.01)*

(52) Cooperative Patent Classification (CPC):
**H04L 25/03318**

(54) **ADAPTIVE DETECTION FUNCTION BASED ON STATISTICAL PROPAGATION CHANNEL ESTIMATION FOR GNSS RECEIVERS**

ADAPTIVE DETEKTIONSFUNKTION BASIEREND AUF STATISTISCHER AUSBREITUNGSKANALSCHÄTZUNG FÜR GNSS-EMPFÄNGER

FONCTION DE DÉTECTION ADAPTIVE BASÉE SUR UNE ESTIMATION STATISTIQUE DE CANAL DE PROPAGATION POUR DES RÉCEPTEURS GNSS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.09.2019 Bulletin 2019/39**

(73) Proprietor: **CENTRE NATIONAL D'ETUDES SPATIALES**
**75039 Paris Cedex 01 (FR)**

(72) Inventor: **AUBAULT, Marion**
**31130 BALMA (FR)**

(74) Representative: **Germain Maureau**
**12, rue Boileau**
**69006 Lyon (FR)**

(56) References cited:
EP-A1- 2 317 713          EP-A1- 2 362 706
US-A1- 2007 241 958     US-A1- 2016 131 737

• **ROUDIER MARION ET AL: "Optimizing GNSS navigation data message decoding in urban environment", 2014 IEEE/ION POSITION, LOCATION AND NAVIGATION SYMPOSIUM - PLANS 2014, IEEE, 5 May 2014 (2014-05-05), pages 581 - 588, XP032616457, DOI: 10.1109/ PLANS.2014.6851419**
• **PRIETO-CERDEIRA ET AL.: "Versatile two-state land mobile satellite channel model with first application to DVB-SH analysis", INTERNATIONAL JOURNAL OF SATELLITE COMMUNICATIONS AND NETWORKING, vol. 28, 8 June 2010 (2010-06-08), pages 291 - 315, XP002783875, Retrieved from the Internet <URL:https://onlinelibrary.wiley. com/doi/epdf/10.1002/sat.964> [retrieved on 20180815], DOI: 10.1002/sat.964**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 544 248 B1

**Description**

FIELD OF THE INVENTION

The present invention relates generally to Global Navigation Satellite System (GNSS) positioning techniques. More specifically, the present invention describes a GNSS receiver and a method to optimize the decoding process in difficult reception environments, in order to improve the robustness of the receiver.

PROBLEM RAISED

GNSS positioning techniques have been used and improved for many years now. Two GNSS systems have been fully deployed for a number of years (the US Global Positioning System (GPS™) and the Russian GLONASS™) and two more are under deployment (the Chinese Beidou Navigation Satellite System and the European Galileo™ system). Each of these systems offers different types of services by transmitting different GNSS signals over different carrier frequencies, for instance to provide various levels of robustness, precision or security, or to limit the positioning to a set of authorised users.

GNSS systems usually operate as follows: a fleet of GNSS satellites revolving around the Earth in very precisely determined orbits transmit positioning signals, which are used by GNSS receivers to determine the transmission delay associated with the positioning signals. Once multiplied by the speed of light, it provides the distances from the receiver to each of the satellites in view, which are known as "pseudo-range" measurements. When four or more pseudo-ranges are calculated, knowing the satellites positions, the receiver can solve a system of equations in order to determine the position of the receiver and to synchronize its clock with the GNSS system clock, also known as a PVT (acronym for Position, Velocity and Time) solution.

To compute the pseudo-range measurements, the receiver needs to know the time at which the message was sent by the satellite. To compute the PVT measurement, the receiver needs to know the satellites' positions. To this end, the GNSS positioning signals transmitted comprise a navigation message, transmitted a slow bit rate (in the range of 50 bits/sec - 2 kbits/sec) and organized in frames and subframes, which carries various information required to compute the PVT solution. This information include information about the time at which the message has been transmitted and information about the position of the satellite transmitting the message, known as ephemeris data.

The navigation message is first modulated by a spreading sequence, generally a pseudo random noise (PRN) sequence, further modulated using a BPSK (Binary Phase Shift Keying), BOC (Binary Offset Carrier), altBOC (alternative BOC) or similar modulation. The resulting signal is then shifted to a carrier frequency.

Each satellite is associated to a distinct PRN sequence, so that the receiver can differentiate the origin of the received signals by way of correlations and allows performing an accurate measurement of the reception time. Use of spreading also makes possible to process signals received at low Signal over Noise Ratios (SNR).

The correct reception of the navigation message is required to compute a PVT measurement, even in degraded propagation environments. For this reason, redundant data are added before its transmission by a channel code, to improve its robustness against errors introduced by the propagation channel. To this end, the navigation message is structured into different basic units of information (information words). Each information word is encoded by a channel coder, adding redundant bits. All these resulting bits (data + redundant) finally form a codeword. This channel coding is very important to allow a better rate of data demodulation success in difficult propagation environments.

Improving the channel coding scheme is therefore one way to improve the performances of GNSS receivers, in particular in degraded propagation environments. New GNSS signals, such as GPS L1C, have been designed especially for urban propagation channels. They are expected to have better demodulation performance compared with previous GNSS signals, as using state of the art channel coding/decoding techniques. In GPS L1C, the navigation message is encoded by a BCH code (acronym for Bose, Ray-Chaudhri and Hocquenghem), associated to a LDPC code (acronym for Low Density Parity Check code) and a CRC.

A powerful mean to decode the protected navigation message is the use of soft-decoding algorithms, wherein the decoding comprises the exchange of soft information in the form of Log-Likelihood Ratios (LLR). The LLR that input the decoder can be expressed as:

$$LLR = \log\left(\frac{p(x = +1/y)}{p(x = -1/y)}\right) \qquad (1)$$

where:

-    x is the transmitted symbol,

- *y* is the received symbol,

- *p(x = +1/y)* is the a-posteriori probability that symbol *x = +1* has been transmitted knowing the received symbol *y*.

The decoder computes the value *L = LLR(x/y)* from which the decision on the value of the bit is made. For example, if *L = LLR(x/y) > 0*, thus *p(x = +1/y) > p(x = -1/y)*.

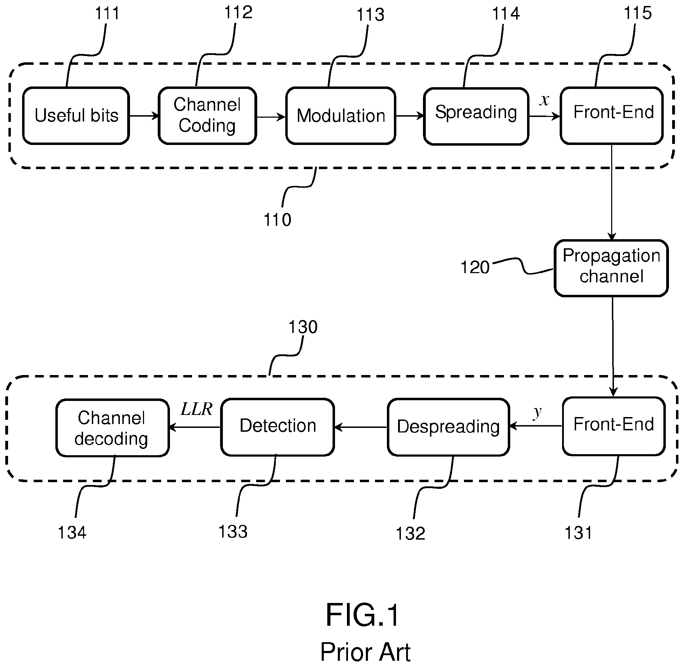

Figure 1 represents a GNSS emission/reception chain block diagram, focusing on a specific satellite/receiver transmission, as known from the prior art.

The GNSS transmitter 110 comprises the channel coding 112 of the useful bits 111 constituting the navigation message. Modulation 113 and spreading 114 are then applied to obtain symbols x, carried by the carrier frequency from the front-end 115. During its transmission, the signal is affected by the propagation channel 120: free-space losses, multipath reflections, etc...

The signal is then processed by GNSS receiver 130, which comprises a front-end 131 in order to bring it back to a lower intermediate frequency, to filter interferences out of the band of interest and to amplify it. The received modulated symbols *y* are then de-spreaded at step 132, by way of correlations with a local replica of the modulated PRN sequence. The output of the correlation is then processed by a detection function 133, to compute a series of *LLR*, that are used to feed a channel decoder 131. The LLR relative to a codeword are provided to the channel decoder that tries to retrieve the information word.

In existing GNSS receivers, without any *a priori* information about the propagation channel, the expression of the detection function is obtained assuming an Additive White Gaussian Noise (AWGN) propagation channel. However, the propagation channel is rarely purely AWGN in real operating conditions, and even less when operating in an urban environment. The propagation channel suffers from multipath reflections, which attenuate and distort the signal received by the GNSS receivers.

Many methods are known from GNSS receivers, in order to mitigate the propagation environment when performing the acquisition/tracking phases, to precisely determine the time at which the direct path of the signal was received, but it is of no impact over the decoding of the navigation message.

There is therefore a need for a solution to reduce the impact of the propagation channel over the decoding of the navigation message in a GNSS receiver, in particular when it operates in an urban environment.

BACKGROUND PRIOR ART

Chapter 5 of Marion Roudier PhD manuscript, "Analysis and Improvement of GNSS Navigation Message Demodulation Performance in Urban Environments", Signal and Image Processing, INP Toulouse, 2015, or Marion Roudier, Thomas Grelier, Lionel Ries, Charly Poulliat, Marie-Laure Boucheret, et al.. Opti-mizing GNSS Navigation Data Message Decoding in Urban Environment. IEEE/ION PLANS 2014,Position Location and Navigation Symposium, May 2014, Monterey, United States. pp.581-588 teach that the performances of the channel decoding are very sensitive to the correct computation of the detection function. Significant improvements are demonstrated considering a detection function that computes LLR based on both observation of the received samples and channel parameters, instead of a detection function computed for an AWGN channel model, as is done in prior art GNSS receivers.

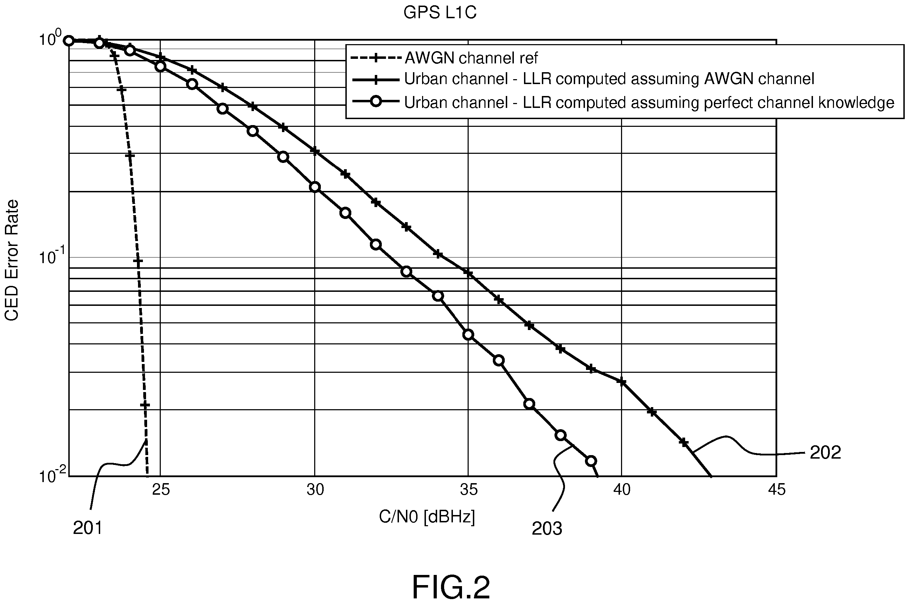

Figure 2 presents some results provided in this thesis of Roudier, wherein the CED error rate (acronym for Clock and Ephemeris Data, which are the only data necessary to compute the receiver's position), that is to say the rate of resulting errors remaining into the CED, when compared the generated CED (in the emitting satellite) before propagation and the received and decoded CED (in the receiver), is plot with regard to the carrier over noise ratio ($C/N_0$).

In figure 2, curve 201 represents the CED error rate obtained considering a detection function adapted to an AWGN propagation channel, when the propagation channel is AWGN. This curve is a theoretical reference curve that corresponds to a GNSS receiver operating in good reception conditions environment. Curve 202 represents the CED error rate obtained using a detection function fit for AWGN propagation channels in an urban propagation channel. This is currently done in GNSS receivers according to the prior art. Curve 203 represents the CED error rate that is obtained considering the same urban propagation channel, using the optimized detection function, namely assuming a perfect knowledge of the propagation channel. An improvement of around 4 dB is obtained for a CED error rate of $10^{-2}$, thanks to the use of this optimised detection function.

Thus, adapting the detection function to take into account the propagation channel impact in difficult reception environments, significantly improves the performances of a GNSS receiver.

However, while the results provided in the thesis are promising, they are obtained in the context of a simulation, wherein the parameters of the propagation channel are perfectly known from the simulation, and therefore from the receiver. In chapter §5.2.2 of the thesis, the LLR are computed considering the exact amplitude used by the propagation channel simulator. In chapter §5.2.3, the LLR are computed using the statistical probability density function of the amplitude calculated knowing the propagation environment type and satellite elevation used by the propagation channel simulator.

As a consequence, these LLR calculations cannot be directly implemented into a GNSS receiver operating in real conditions, that is to say in a receiver having no knowledge of the parameters concerning the propagation channel.

Therefore, one goal of the disclosure is to improve the performance of a GNSS receiver, in particular in an urban environment, by adapting the detection function to the propagation environment. To this end, the disclosure proposes to implement a detection function that computes LLR as close as possible to the optimized detection function obtained with a perfect knowledge of the propagation channel. For this purpose, since the propagation channel is not known from the GNSS receiver, the urban propagation channel is here modelled according to a statistical propagation channel model which parameters depends for instance on the satellite elevation, received power and environment type. These parameters may be stored into a fixed table, and thanks to different possible receiver processes such as vision sensor, DOA (acronym for Direction Of Arrival) estimation, C/N0 (Carrier over Noise ratio) estimation or almanachs reading, the receiver may be able to deduce a statistical parameter, and thus to compute the LLR based on that statistical parameter.

## SUMMARY OF THE INVENTION

The invention is defined by the independent claims. Preferred embodiments are set forth in the dependent claims. In one aspect, the disclosure relates to a GNSS receiver, configured to receive a GNSS signal from a satellite, comprising a channel decoder configured to decode information carried by the GNSS signal. The GNSS receiver is further configured to:

- determine parameters relative to a statistical propagation channel model,
- compute a statistical channel attenuation from said statistical propagation channel model using the parameters,
- compute LLRs from a detection function adapted to the statistical propagation channel model, using the computed statistical channel attenuation, and
- use the said LLRs to feed the channel decoder.

The statistical propagation channel model may be any statistical channel model. According to one aspect, a Prieto channel model is considered. Advantageously, in this embodiment, the LLRs are computed by the detection function as:

$$LLR_{Prop\_channel}(i)$$

$$= log\left(\frac{\int_0^{+\infty}\left(e^{\frac{-(y(i)-a_{channel})^2}{2\sigma_{n_I}^2}}\frac{a_{channel}}{b_0}e^{-\frac{\left(a_{channel}^2+z^2\right)}{2b_0}}I_0\left[\frac{za_{channel}}{b_0}\right]\right)da_{channel}}{\int_0^{+\infty}\left(e^{\frac{-(y(i)+a_{channel})^2}{2\sigma_{n_I}^2}}\frac{a_{channel}}{b_0}e^{-\frac{\left(a_{channel}^2+z^2\right)}{2b_0}}I_0\left[\frac{za_{channel}}{b_0}\right]\right)da_{channel}}\right) \quad (2)$$

where:

- z is the direct signal component amplitude,
- $b_0$ is the average multipath power with respect to an unblocked direct signal, and

$$I_0\left[\frac{za_{channel}}{b_0}\right] = \int_0^{\pi} e^{\frac{za_{channel}}{b_0}cos\vartheta}d\vartheta$$

- is a modified Bessel function.

According to another aspect, the statistical propagation channel model is selected from a set of propagation channel models considering the parameters relative to a statistical propagation channel model, switching for instance between a Prieto channel model and an AWGN channel model, based on a signal over noise ratio or a ratio of clear sky.

In one aspect of the GNSS receiver disclosed, at least some of the parameters relative to a statistical propagation channel model are provided by means configured to determine a type of propagation environment from a plurality of possible propagation environments.

The means for determining a type of propagation environment may for instance comprise a vision sensor configured to take an image of the sky, associated to a processing unit configured to determine the ratio of clear sky into the image of the sky, and to choose a type of propagation environment from a set of propagation environments by comparing the ratio of clear sky with one or more threshold.

Alternately, the means for determining a type of propagation environment may comprise a module configured to receive a non-GNSS signal having an identifier, associated to a database providing a match between the identifier and a type of propagation environment.

Alternately, the means for determining a type of propagation environment may comprise a database configured to provide a match between a type of propagation environment and a position of the GNSS receiver.

In an aspect of the GNSS receiver disclosed, at least some of the parameters relative to a statistical propagation channel model are provided by means configured to determine an elevation of the satellite.

These means configured to determine an elevation of the satellite may comprise an array antenna, associated to a processing unit configured to determine a direction of arrival from the signal received over the various arrays of the antenna, and/or a processing unit configured to extract a position of the satellite from ephemeris data or almanac data carried by the navigation message and to compute the elevation using said ephemeris data or almanac data and a position of the GNSS receiver.

In an aspect of the GNSS receiver disclosed, at least some of the parameters relative to a statistical propagation channel model are provided by means configured to determine a propagation channel state.

These means for determining a propagation channel state may comprise a processing unit configured to measure a carrier over noise measurement of the received signal and to compare said carrier over noise measurement with a threshold to determine a propagation channel state.

The disclosure further concerns a method to compute LLRs in a GNSS receiver configured to receive a GNSS signal from a satellite, the LLRs being inputs to a channel decoder (134). The method comprises the steps of:

- determining parameters relative to a statistical propagation channel model,
- computing a statistical channel attenuation from said statistical propagation channel model using the parameters, and
- computing said LLRs from a detection function adapted to the statistical propagation channel model, using the statistical channel attenuation computed in the previous step.

The various aspects described in the disclosure are described in isolation, but may be combined in a same GNSS receiver. For instance, the means for determining a type of propagation environment may comprise one or more of the devices recited to achieve the selection of a propagation environment, and/or be combined with one or more of the means described to determine a satellite elevation and a propagation channel state.

BRIEF DESCRIPTION OF THE DRAWINGS

The disclosure will be better understood and its various features and advantages will emerge from the following description below, provided for illustration purposes only, of a number of exemplary embodiments and its appended figures in which:

- Figure 1 represents a GNSS emission/reception chain block diagram, as known from the prior art;
- Figure 2 plots the navigation message decoding error rate with regard to the carrier over noise ratio ($C/N_0$) with regard to various detection functions;
- Figure 3 represents a GNSS receiver according to one embodiment;
- Figure 4 represents a flowchart of a method according to an embodiment, to improve the decoding performances of a GNSS receiver.

The examples disclosed in this specification are only illustrative of some embodiments, proposed to expose the general principles of the present disclosure, and do not define the scope of the intended protection, which is defined by its set of claims.

DETAILED DESCRIPTION OF THE INVENTION

The present disclosure involves a GNSS receiver comprising a channel decoder configured to decode a navigation message transmitted within a GNSS signal. The channel decoding algorithms must use soft information exchanges, generally Log Likelihood Ratios (LLRs) based on *a-posteriori* probability, or related approximated expressions as soft inputs. This is the case for most of modern decoders, as for instance the Belief Propagation for the LDPC codes, or the BCJR (acronym for Bahl, Cocke, Jelinek and Raviv, from the name of the inventors) for turbo-codes.

Propagation channel models have been developed, in particular to measure the performances of equipment by way of simulations or experimentation in laboratory. The goal of these propagation channel models is to recreate the shape of the received signal as faithfully as possible, taking into account the impact of the propagation channel on a GNSS signal. There are numerous different propagation channel models, depending on the application considered, the carrier frequency, the signal bandwidth, the environment, the relative speed of the equipments, and others.

These propagation channel models can be classified into three main categories:

- Deterministic: using physical considerations about the position of the various actors of the transmission and the propagation environment, all the possible paths of the signal are analyzed, through ray tracing for instance. These models are exact but complex to implement and require a lot of processing power,

- Statistical: using a large number of real measurements, the statistical behavior of the propagation channel is modeled. These models are approximate but their implementation can be done at a very low cost, and

- Semi-deterministic: combining both deterministic data with statistical data.

Within the framework of the disclosure, only statistical models are considered, because they do not require an accurate knowledge of the propagation environment, contrary to the deterministic or semi-deterministic models.

Some GNSS statistical propagation channel models have been conceived based on measurement campaigns, to be as close as possible to the reality. Among them are the Perez-Fontan propagation channel model and the Prieto model, which is an evolution of the Perez-Fontan model. Both are statistical propagation channel models representative of urban propagation environments.

The Prieto model is described in details in R. Prieto-Cerdeira, F. Pérez Fontán, P. Burzigotti, A. Bolea Alamañac, and I. Sanchez Lago, "Versatile two-state land mobile satellite channel model with first application to DVB-SH analysis", Int. J. Satell. Commun.Netw., DOI: 10.1002/sat.964, 2010.

This statistical model considers that the complex envelope of the overall received signal follows a Loo distribution that can be expressed as:

$$c(t) = a_{channel}(t)e^{j\varphi_{channel}(t)} = a_{direct}(t)e^{j\varphi_{direct}(t)} + a_{multipath}(t)e^{j\varphi_{multipath}(t)} \qquad (3)$$

where:

- $c(t)$ is the complex envelope of the overall received signal (corresponding to the propagation channel impact),
- $a_{channel}(t)$ is the channel attenuation,
- $\varphi_{channel}(t)$ is the channel phase,
- $a_{direct}(t)$ is the direct signal amplitude, and $\varphi_{direct}(t)$ is its phase,
- $a_{multipath}(t)$ is the reflected signal amplitude, and $\varphi_{multipath}(t)$ is its phase.

$a_{direct}(t)e^{j\varphi_{direct}(t)}$ follows a Log-Normal($A$, $\Sigma$) distribution, $a_{multipath}(t)$ follows a Rayleigh(MP) distribution, and $\varphi_{multipath}(t)$ an uniform $(0, 2\pi)$ distribution, with:

-

$$A \sim Gaussian(\mu_1, \sigma_1),$$

-

$$\Sigma \sim Gaussian(\mu_2, \sigma_2), \text{ with } \mu_2 = a_1 * A^2 + a_2 * A + a_3, \sigma_2 = b_1 * A^2 + b_2 * A + b_3,$$

-

$$MP \sim Gaussian(\mu_3, \sigma_3),$$

where $\mu_1$, $\sigma_1$, $a_1$, $a_2$, $a_3$, $b_1$, $b_2$, $b_3$, $\mu_3$ and $\sigma_3$ are fixed and depend on environmental conditions.

The set of parameters depending on environmental conditions ($\mu_1$, $\sigma_1$, $a_1$, $a_2$, $a_3$, $b_1$, $b_2$, $b_3$, $\mu_3$ and $\sigma_3$) is provided in a table having three entries:

- Scenario, that is to say the type of propagation environment (semi-urban, urban, deep urban, open rural, ...),
- Elevation, that is to say the elevation angle of the satellite transmitting the GNSS signal, and
- Channel state, that is to say, for the Prieto model, GOOD or BAD depending on the quality of the propagation environment.

Parameters tables are described with regard to the carrier frequency.

State of the art receivers use a detection function where the detection function is fit to operate in an AWGN propagation channel. Starting from equation (1), using the Bayes rule, the LLR expression adapted to an AWGN propagation channel model can be re-written as:

$$LLR = log\left(\frac{p(y/x = +1)}{p(y/x = -1)}\right) \qquad (4)$$

The relation between the emitted symbol x and the received symbol y, for an AWGN channel, is:

$$y(i) = x(i) + n_I(i) \qquad (5)$$

where $n_I(i)$ is the normalized additive white Gaussian noise at the output of correlator 132 for symbol i.

The LLR calculation performed by the detection function in the context of an AWGN propagation channel is therefore:

$$LLR_{AWGN}(i) = \frac{2y(i)}{\sigma_{n_I}} \qquad (6)$$

with $\sigma_{n_I}$ the standard deviation of $n_I$.

In a GNSS receiver according to one embodiment, the detection function is adapted in order to take into account the fact that the propagation channel is not necessarily AWGN. To this end, the relation between the emitted symbol x and the received symbol $y$ is expressed as:

$$y(i) = x(i)R[\varepsilon_\tau(i)]a_{channel}(i)\cos\left(\varepsilon_\varphi(i)\right) + n_I(i) \qquad (7)$$

where:

- $R$ is the autocorrelation function of the spreading code,
- $\varepsilon_\tau$ is the code delay estimation error resulting from the correlations in the de-spreading ,which is close to zero as the DLL (acronym for Delay Locked Loop) of the receiver normally has compensated from this code delay error, and
- $\varepsilon_\varphi$ is the phase error between the received signal and the signal used for correlations in the de-spreading, which is constant and close to zero as the PLL (acronym for Phase Locked Loop) of the receiver normally has compensated from this phase error.

To ease understanding the description, and for illustration and simplification purposes only, assumption is taken that the PLL and DLL are perfectly locked ($\varepsilon_\varphi = 0$ and $\varepsilon_\tau = 0$). Equation (6) can then be rewritten as:

$$y(i) = x(i)a_{channel}(i) + n_I(i) \qquad (8)$$

The expression of the LLRs adapted to the propagation channel is therefore:

$$LLR_{Prop\_channel}(i) = log\left(\frac{\int_0^{+\infty}\left(e^{\frac{-(y(i)-a_{channel})^2}{2\sigma_{n_I}^2}}p(a_{channel})\right)da_{channel}}{\int_0^{+\infty}\left(e^{\frac{-(y(i)+a_{channel})^2}{2\sigma_{n_I}^2}}p(a_{channel})\right)da_{channel}}\right) \qquad (9)$$

Considering the Prieto model, equation (8) may be rewritten as:

$$LLR_{Prop\_channel}(i)$$

$$= log\left(\frac{\int_0^{+\infty}\left(e^{\frac{-(y(i)-a_{channel})^2}{2\sigma_{n_I}^2}}\frac{a_{channel}}{b_0}e^{-\frac{(a_{channel}^2+z^2)}{2b_0}}I_0\left[\frac{za_{channel}}{b_0}\right]\right)da_{channel}}{\int_0^{+\infty}\left(e^{\frac{-(y(i)+a_{channel})^2}{2\sigma_{n_I}^2}}\frac{a_{channel}}{b_0}e^{-\frac{(a_{channel}^2+z^2)}{2b_0}}I_0\left[\frac{za_{channel}}{b_0}\right]\right)da_{channel}}\right) \qquad (10)$$

where:

- z is the direct signal component amplitude, which is obtained, considering equation (3), from the average Log-Normal(A, $\Sigma$) distribution,
- $b_0$ is the average multipath power with respect to an unblocked direct signal, which is obtained, considering equation (3), from the Gaussian distribution $MP = Gaussian(\mu_3, \sigma_3)$, mainly $\frac{1}{2}\cdot 10^{MP/10}$, and

- $I_0\left[\frac{za_{channel}}{b_0}\right] = \int_0^{\pi}e^{\frac{za_{channel}\cos\vartheta}{b_0}}d\vartheta$ , which is the modified Bessel function.

The GNSS receiver according to the disclosure is configured to first determine parameters relative to a statistical propagation channel model, and then to use these parameters to compute a statistical channel attenuation by feeding a statistical propagation channel model with the parameters determined. The type of parameters determined depends on the statistical propagation channel model considered.

The GNSS receiver according to the disclosure is configured to use the statistical channel attenuation provided by the statistical propagation channel model in order to compute LLR, which are inputs to the channel decoder, as a detection function.

According to one embodiment of a GNSS receiver according to the disclosure, the statistical propagation channel model considered is a Prieto model. This embodiment is particularly adapted to fit with urban propagation environments. However, any other statistical propagation channel model could be considered.

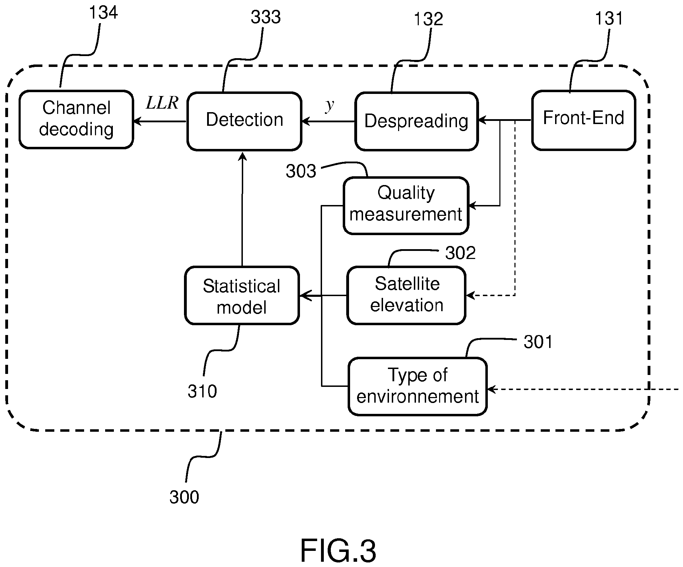

Figure 3 represents a GNSS receiver according to one embodiment, comprising hardware and software devices that allow the receiver to feed a statistical propagation channel model. The receiver comprises, in addition to a front-end module 131, a de-spreading module 132, a detection module 333 and a channel decoder module 134:

- means 301 configured to determine a type of propagation environment from a plurality of possible propagation environments,

- means 302 configured to determine an elevation of the satellite, and

- means 303 configured to determine a propagation channel state.

These means provide information which are inputs to a module 310 configured to calculate an attenuation based on a statistical propagation channel model. Such a receiver is particularly adapted to implement a statistical channel propagation model. The GNSS receiver does not have to systematically implement the three devices, but to adapt the number and features of the devices according to the statistical channel propagation model considered. For instance, the Perez-Fontan model only requires means 303 configured to determine a propagation channel state.

Depending on the embodiment of a GNSS receiver according to the disclosure, the means 301 configured to determine a type of propagation environment may come in various forms. In an embodiment of a GNSS receiver according to the disclosure, the means configured to determine a type of propagation environment may be a vision sensor, like a camera or a fisheye camera, capturing images of the sky. The camera is associated to a processing unit, configured to differentiate the masked zones from the clear sky into the image taken by the vision sensor. Such a determination is known from the person skilled, and is for instance described in Attia et al., "Image analysis based real time detection of satellites reception state", 13th international IEEE annual conference on Intelligent Transportation Systems, September 19-22, 2010, p1651 - 1656. The types of propagation environment correspond to different respective degrees of obstruction, which correspond to different degrees of urban development.

Once the clear sky and masked zone have been determined, the ratio of clear sky in the image is measured and compared with one or more thresholds set in accordance with a set of possible types of propagation environments, as defined by the two-state model of Prieto.

For instance, considering the two-state model parameters set provided by Prieto, six types of propagation environment may be selected according to the extent of clear sky: open rural, light tree-shadowed, intermediate tree shadowed, heavy tree-shadowed, suburban and urban. When the model considered is the model corresponding to the L-band, two types of propagation environment may be selected according to the extent of clear sky: suburban and urban.

The type of environment determined is provided to module 310 in charge of determining a statistical channel attenuation.

In another embodiment, the means 301 configured to determine a type of propagation environment may be a module configured to receive a non-GNSS signal having an identifier, as for instance a Wi-Fi™ signal, a Bluetooth™ signal, or a signal from a mobile communication network (3G, 4G, 5G...) or the like, which transmits an identification data about the access point or base station from which the signal originates. The identifier is used along with a database to make a match between the identifier of the access point and an approximate location, and therefore a type of propagation environment.

This embodiment is particularly suitable to a GNSS receiver provided with an auxiliary communication link, as it is the case for Assisted GNSS receivers, like for instance a smartphone. In that case, the database may be either embedded into the GNSS receiver or located on a remote server accessible using the auxiliary communication link.

In another embodiment, the means 301 configured to determine a type of propagation environment may be a database configured to make a match between a GNSS receiver's position and a type of propagation environment. Indeed, as soon as the position of the receiver is known, it can be used along with a geographic database to deduce the type of propagation channel model that is to be used.

In another embodiment, the means 301 configured to determine a type of propagation environment may be a mix between two or more of the previously described embodiments. For instance, the type of propagation environment may be determined using a vision sensor at the receiver start, and by performing a match between the position of the receiver and a local database as soon as the position of the GNSS receiver is available.

In an embodiment of a GNSS receiver according to the disclosure, the means 302 configured to determine an elevation of the satellite may be an array antenna, associated to a processing unit configured to determine a direction of arrival from the signal received over the various arrays of the antenna. Indeed, various Direction Of Arrival (DOA) algorithms are known to extract this information from a signal received over an array antenna, as for instance the high resolution MUSIC algorithm (acronym for Multiple Signal Classification), the ROOTMUSIC algorithm, or the ESPRIT algorithm (acronym for Estimation of Signal Parameter via Rotational Invariance Technique). One of these algorithms may be used to determine the elevation of the satellite from which the transmission originates, this information being provided to module 310 in charge of determining a statistical channel attenuation.

In another embodiment of a GNSS receiver according to the disclosure, the means 302 configured to determine an elevation of the satellite may be a processing unit configured to retrieve this information from the ephemeris, which contain information about the position of a specific satellite, or from the almanacs, which contain information about the position of all the satellites of the constellation. The elevation can be extracted easily, knowing the position of the satellite and the position of the GNSS receiver. This elevation measurement does not have to be very accurate, as for instance the table associated to the Prieto propagation channel model in L-band take increments of 10° of elevation. Depending on the embodiment, the ephemeris and/or almanacs considered to retrieve the information about the satellite elevation are extracted from the navigation message or brought by another datalink than the GNSS link as of a mobile communication network or a Wi-Fi™ network, for instance in an Assisted GNSS receiver.

In another embodiment, the means 302 configured to determine an elevation of the satellite may be a mix of the two previously described embodiments. For instance, the receiver may use an array antenna to determine the elevation of the satellite at receiver start, and the ephemeris/almanacs, once available.

In an embodiment of a GNSS receiver according to the disclosure, the means 303 configured to determine a propagation channel state may be a processing unit configured to estimate a carrier over noise ratio ($C/N0$) measurement or a signal over noise ratio ($SNR$) measurement from the signal that outputs the de-spreading module 132. This measurement is compared to a threshold. When the estimated signal quality measurement is above the said threshold, the channel state is considered as "BAD". When not, it is considered as "GOOD". This "GOOD/BAD" status information is provided to module 310 in charge of determining a statistical channel attenuation.

Once determined, the type of propagation channel, the elevation of the satellite and the propagation channel state are provided to module 310, in charge of computing a statistical channel attenuation. This is done by first retrieving parameters relative to a distribution from a table provided by the statistical propagation channel model, and then using these parameters to compute a statistical channel attenuation $a_{channel}$, using for instance equation (3). To this end, module 310 may comprise or may be associated to or connected to a memory comprising the table of parameters defined by the statistical propagation channel model.

The statistical channel attenuation information is provided to and used by the adaptive detection module 333, in order to compute LLR measurements adapted to the propagation channel, using equation (10) when considering a Prieto statistical propagation model, or any other formula derived from equation (8) and adapted to the statistical propagation channel model.

The various processing units required to implements embodiments of the disclosure may take the form of one or more software reprogrammable calculation machines (like microprocessors, microcontrollers, digital signal processors (DSP), ...), dedicated calculation machines (like Field Programmable Gate Arrays (FPGA), Application Specific Integrated Circuits (ASIC), ...), or any other appropriate means.

The previously described embodiments are described in many details with respect to the Prieto propagation channel model. However, the disclosure is not limited to the Prieto model, and the devices 301, 302 and 303 may be adapted to provide any input required to compute any statistical model measurement in module 310.

Likewise, the LLR computation performed in the detection module 333 is to be adapted, depending on the statistical propagation channel model considered.

In an embodiment, various propagation channel models may be considered by the receiver. For instance, in a GNSS receiver implementing a statistical propagation channel model based on a Prieto model, wherein the means 301 for determining a type of propagation channel model are a vision sensor configured to determine the ratio of clear sky, an additional threshold may be set, above which the channel model considered is adapted to an AWGN propagation channel, the LLR being therefore computed by the adaptive detection module 333, using the formula provided in (6). This way, the GNSS receiver may use the output of the means 301 to determine the type of propagation channel model that is the best suited to the actual propagation environment from a set of propagation channel models, comprising for instance one or more statistical propagation channel models (including or not the Prieto model) and an AWGN propagation channel model. This selection may as well be done regarding the *C/N0* or *SNR* measurements computed by the means 303 configured to determine a propagation channel state.

According to various embodiments, the parameters used to feed the statistical propagation channel model may be calculated at one or more of the following events:

- at the receiver start,

- when the navigation message decoding error rate is above a threshold,

- at regular intervals, depending or not on the criticality of the positioning measurement considered,

- on demand.

The GNSS receiver according to the disclosure may be a specific GNSS receiver designed to implement the required features. It can also be a calculation device, like a software programmable device or a dedicated device, performing a GNSS positioning calculation using an adaptive detection function as defined by the disclosure, the calculation device including or being connected to means required to feed the statistical channel propagation model.

Advantageously, the GNSS receiver according to the disclosure may be implemented through a firmware update in an existing GNSS receiver that already comprises the means required to determine the set of parameters required by statistical propagation channel model. For instance, considering a Prieto model, the GNSS receiver according to one embodiment may be implemented into a smartphone, using a camera of the smartphone in order to determine the type of propagation channel, and a Wi-Fi™ datalink to retrieve almanacs that are used to determine the satellite elevation. In one embodiment, the smartphone may ask the user to take a picture of the sky when starting a positioning measurement, in order to calculate a ratio of clear sky.

In a GNSS receiver according to the disclosure, which takes the propagation channel into consideration during the phase of detection, the error rate for decoding the navigation message is decreased by a few dB, which is of a particular interest in particular when operating in an urban propagation environment, as it allows operating in more constrained environments and/or provides first position measurement in a shorter time, with regard to existing GNSS receivers.

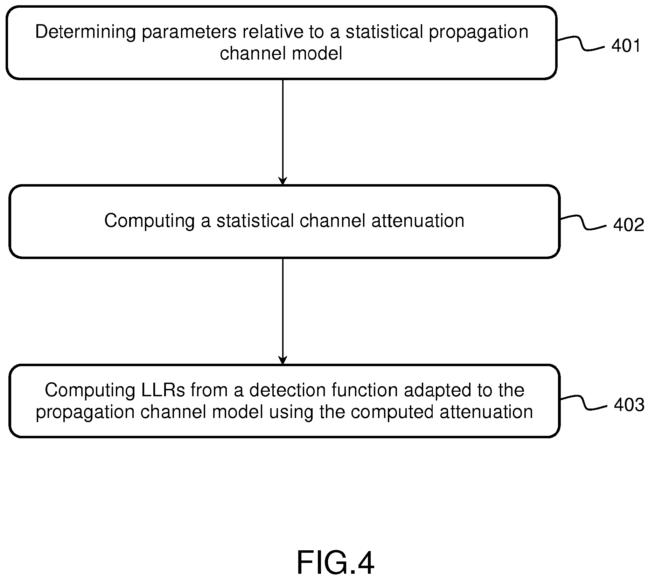

In addition, the disclosure proposes a method, an embodiment of the method being represented in figure 4, to improve the decoding performances of a GNSS receiver, where the computation of the detection function is adaptive, as done by:

- determining parameters relative to a statistical propagation channel model (401), which are, in the case of a Prieto propagation channel model, a type of propagation environment, an elevation of the satellite and a propagation channel state,
- computing a statistical channel attenuation from the statistical propagation channel model (402), which can be, for instance, a Prieto statistical propagation channel model, using the parameters determined in the previous step,

- computing LLRs from a detection function (403) adapted to the statistical propagation channel model using the statistical channel attenuation calculated,

- using the LLRs to feed a channel decoder.

While embodiments of the disclosure have been illustrated by a description of various examples, and while these embodiments have been described in considerable details, it is not the intent of the applicant to restrict or in any way limit the scope of the appended claims to such details. The disclosure in its broader aspects is therefore not limited to the specific details, representative methods, and illustrative examples shown and described.

**Claims**

1. A GNSS receiver (300) configured to receive a GNSS signal from a satellite, said GNSS receiver comprising a channel decoder (134) configured to decode information carried by the GNSS signal, the GNSS receiver being further configured to:

   - determine parameters relative to inputs of a statistical propagation channel model (301, 302, 303), the statistical propagation channel model being a Prieto channel model or a Perez-Fontan channel model,
   - compute a statistical channel attenuation from said statistical propagation channel model (310) using the determined parameters,
   - compute LLRs from a detection function (333) adapted to the statistical propagation channel model, using the computed statistical channel attenuation, and
   - use the said LLRs to feed the channel decoder,

   the GNSS receiver further comprising means (301) configured to determine a type of propagation environment from a plurality of possible propagation environments and configured to provide at least some of the parameters relative to inputs of a statistical propagation channel model,
   the means for determining a type of propagation environment comprising a vision sensor configured to take an image of the sky,
   the GNSS receiver further comprising a processing unit associated with the vision sensor and configured to:

   - determine a ratio of clear sky in the image of the sky, and
   - choose a type of propagation environment from a set of propagation environments by comparing the ratio of clear sky with one or more thresholds.

2. The GNSS receiver of claim 1, wherein the statistical propagation channel model is selected considering the parameters (301, 303) relative to inputs of a statistical propagation channel model.

3. The GNSS receiver of one of previous claims, wherein the statistical propagation channel model is a Prieto channel model, and wherein the LLRs are computed by the detection function as:

$$LLR_{Prop\_channel}(i)$$

$$= log\left(\frac{\int_0^{+\infty}\left(e^{\frac{-(y(i)-a_{channel})^2 a_{channel}}{2\sigma_{n_I}^2}}\frac{a_{channel}}{b_0}e^{-\frac{(a_{channel}^2+z^2)}{2b_0}}I_0\left[\frac{za_{channel}}{b_0}\right]\right)da_{channel}}{\int_0^{+\infty}\left(e^{\frac{-(y(i)+a_{channel})^2 a_{channel}}{2\sigma_{n_I}^2}}\frac{a_{channel}}{b_0}e^{-\frac{(a_{channel}^2+z^2)}{2b_0}}I_0\left[\frac{za_{channel}}{b_0}\right]\right)da_{channel}}\right)$$

where:

   - z is the direct signal component amplitude,

- $b_0$ is the average multipath power with respect to an unblocked direct signal,

$$I_0 \left[ \frac{za_{channel}}{b_0} \right] = \int_0^\pi e^{\frac{za_{channel}}{b_0} cos\vartheta} d\vartheta$$ is a modified Bessel function,

- $\sigma_{n_I}$ is the standard deviation of $n_I$, $n_I$ being the normalized additive white Gaussian noise at the output of a correlator (132),
- $a_{channel}$ is the channel attenuation
- $y(i) = x(i)R[\varepsilon_\tau(i)]a_{channel}(i) \cos(\varepsilon_\varphi(i)) + n_I(i)$, $x$ being the emitted symbol, $y$ being the received symbol, R being the autocorrelation function of the spreading code, $\varepsilon_\tau$ being the code delay estimation error resulting from the correlations in the de-spreading, $\varepsilon_\varphi$ is the phase error between the received signal and the signal used for correlations in the de-spreading.

4. The GNSS receiver of any of claims 1 to 3, wherein the means for determining a type of propagation environment comprise a module configured to receive a non-GNSS signal having an identifier, associated to a database providing a match between the identifier and a type of propagation environment.

5. The GNSS receiver of any of claims 1 to 4, wherein the means for determining a type of propagation environment comprise a database configured to provide a match between a type of propagation environment and a position of the GNSS receiver.

6. The GNSS receiver of any previous claim, wherein at least some of the parameters relative to inputs of a statistical propagation channel model are provided by means (302) configured to determine an elevation of the satellite.

7. The GNSS receiver of claim 6, wherein the means for determining an elevation of the satellite comprise an array antenna associated to a processing unit configured to determine a direction of arrival from the signal received over the various arrays of the antenna.

8. The GNSS receiver of claim 6, wherein the means for determining an elevation of the satellite comprise a processing unit configured to extract a position of the satellite from ephemeris data or almanac data carried by the navigation message, and to compute the elevation using said ephemeris data or almanac data and a position of the GNSS receiver.

9. The GNSS receiver of any previous claim, wherein at least some of the parameters relative to inputs of a statistical propagation channel model are provided by means (303) configured to determine a propagation channel state.

10. The GNSS receiver of claim 9, wherein the means for determining a propagation channel state comprise a processing unit configured to measure a carrier over noise measurement of the received signal, and to compare said carrier over noise measurement with a threshold to determine a propagation channel state.

11. A method to compute LLRs in a GNSS receiver (300) configured to receive a GNSS signal from a satellite, the LLRs being inputs to a channel decoder (134), the method comprising the steps of:

   - determining parameters relative to inputs of a statistical propagation channel model (401), the statistical propagation channel model being a Prieto channel model or a Perez-Fontan channel model,
   - computing a statistical channel attenuation from said statistical propagation channel model (402) using the determined parameters, and
   - computing said LLRs (403) from a detection function adapted to the statistical propagation channel model, using the statistical channel attenuation computed in the previous step,

   the method further comprising the steps of:

   - providing, by means (301) configured to determine a type of propagation environment from a plurality of possible propagation environments, at least some of the parameters relative to inputs of a statistical propagation channel model,
   - taking an image of the sky by a vision sensor comprised in the means for determining a type of propagation environment,
   - determining, by a processing unit associated with the vision sensor, a ratio of clear sky in the image of the sky, and

- choosing, by the processing unit, a type of propagation environment from a set of propagation environments by comparing the ratio of clear sky with one or more thresholds.

**Patentansprüche**

1. GNSS-Empfänger (300), der konfiguriert ist, ein GNSS-Signal von einem Satelliten zu empfangen, der GNSS-Empfänger umfassend einen Kanaldecodierer (134), der konfiguriert ist, durch das GNSS-Signal getragene Informationen zu decodieren, wobei der GNSS-Empfänger ferner konfiguriert ist zum:

   - Bestimmen von Parametern relativ zu Eingaben eines statistischen Ausbreitungskanalmodells (301, 302, 303), wobei das statistische Ausbreitungskanalmodell ein Prieto-Kanalmodell oder ein Perez-Fontan-Kanalmodell ist,
   - Berechnen einer statistischen Kanaldämpfung aus dem statistischen Ausbreitungskanalmodell (310) unter Verwendung der bestimmten Parameter,
   - Berechnen von LLRs aus einer an das statistische Ausbreitungskanalmodell eingerichteten Erkennungsfunktion (333), unter Verwendung der berechneten statistischen Kanaldämpfung, und
   - Verwenden der LLRs zum Zuführen an den Kanaldecodierer,

   der GNSS-Empfänger ferner umfassend Mittel (301), die konfiguriert sind, einen Typ der Ausbreitungsumgebung aus einer Vielzahl von möglichen Ausbreitungsumgebungen zu bestimmen, und die konfiguriert sind, mindestens einige der Parameter relativ zu den Eingaben eines statistischen Ausbreitungskanalmodells bereitzustellen,
   die Mittel zum Bestimmen eines Typs der Ausbreitungsumgebung umfassend einen Sichtsensor, der zum Aufnehmen eines Bildes des Himmels konfiguriert ist,
   der GNSS-Empfänger ferner umfassend eine Verarbeitungseinheit, die dem Sichtsensor zugehörig und konfiguriert ist zum:

   - Bestimmen eines Verhältnisses von freiem Himmel in dem Bild des Himmels, und
   - Wählen eines Typs der Ausbreitungsumgebung aus einem Satz von Ausbreitungsumgebungen durch Vergleichen des Verhältnisses des freien Himmels mit einem oder mehreren Schwellenwerten.

2. GNSS-Empfänger nach Anspruch 1, wobei das statistische Ausbreitungskanalmodell unter Berücksichtigung der Parameter (301, 303) relativ zu den Eingaben eines statistischen Ausbreitungskanalmodells ausgewählt wird.

3. GNSS-Empfänger nach einem der vorstehenden Ansprüche, wobei das statistische Ausbreitungskanalmodell ein Prieto-Kanalmodell ist, und wobei die LLRs durch die Erkennungsfunktion berechnet werden als:

$$LLR_{Prop\_channel}(i) = log\left(\frac{\int_0^{+\infty}\left(e^{\frac{-(y(i)-a_{channel})^2 a_{channel}}{2\sigma_{n_I}^2}}e^{-\frac{(a_{channel}^2+z^2)}{2b_0}}I_0\left[\frac{za_{channel}}{b_0}\right]\right)da_{channel}}{\int_0^{+\infty}\left(e^{\frac{-(y(i)+a_{channel})^2 a_{channel}}{2\sigma_{n_I}^2}}e^{-\frac{(a_{channel}^2+z^2)}{2b_0}}I_0\left[\frac{za_{channel}}{b_0}\right]\right)da_{channel}}\right)$$

wobei:

   - $z$ die Amplitude der direkten Signalkomponente ist,
   - $b_0$ die durchschnittliche Mehrwegeenergie bezüglich eines nicht blockierten direkten Signals ist,
   - $I_0\left[\frac{za_{channel}}{b_0}\right] = \int_0^\pi e^{\frac{za_{channel}}{b_0}cos\vartheta}d\vartheta$ eine modifizierte Bessel-Funktion ist,
   - $\sigma_{n_I}$ die Standardabweichung von $n_I$ ist, wobei $n_I$ das normierte additive weiße gaußsche Rauschen am Ausgang eines Korrelators ist (132),
   - $a_{channel}$ die Kanaldämpfung ist
   - $y(i) = x(i)R[\varepsilon_\tau(i)]a_{channel}(i)\,cos\,(\varepsilon_\varphi(i)) + n_I(i)$, wobei $x$ das ausgestrahlte Symbol, $y$ das empfangene Symbol, $R$ die

Autokorrelationsfunktion des Streucodes, $\varepsilon_\tau$ der Codeverzögerungsschätzungsfehler, der aus den Korrelationen bei dem Entstreuen resultiert, $\varepsilon_\varphi$ der Phasenfehler zwischen dem empfangenen Signal und dem für die Korrelationen bei dem Entstreuen verwendeten Signal ist.

4. GNSS-Empfänger nach einem der Ansprüche 1 bis 3, wobei die Mittel zum Bestimmen eines Typs der Ausbreitungsumgebung ein Modul umfassen, das konfiguriert ist, ein Nicht-GNSS-Signal zu empfangen, das einen Identifikator aufweist, der einer Datenbank zugeordnet ist, die eine Übereinstimmung zwischen dem Identifikator und einem Typ der Ausbreitungsumgebung bereitstellt.

5. GNSS-Empfänger nach einem der Ansprüche 1 bis 4, wobei die Mittel zum Bestimmen eines Typs der Ausbreitungsumgebung eine Datenbank umfassen, die konfiguriert ist, eine Übereinstimmung zwischen einem Typ der Ausbreitungsumgebung und einer Position des GNSS-Empfängers bereitzustellen.

6. GNSS-Empfänger nach einem der vorstehenden Ansprüche, wobei mindestens einige der Parameter relativ zu den Eingaben eines statistischen Ausbreitungskanalmodells durch Mittel (302) bereitgestellt werden, die konfiguriert sind, eine Höhe des Satelliten zu bestimmen.

7. GNSS-Empfänger nach Anspruch 6, wobei die Mittel zum Bestimmen einer Höhe des Satelliten eine Array-Antenne umfassen, die einer Verarbeitungseinheit zugeordnet ist, die konfiguriert ist, eine Ankunftsrichtung aus dem über die verschiedenen Arrays der Antenne empfangenen Signal zu bestimmen.

8. GNSS-Empfänger nach Anspruch 6, wobei die Mittel zum Bestimmen einer Höhe des Satelliten eine Verarbeitungseinheit umfassen, die konfiguriert ist, eine Position des Satelliten aus Ephemeridendaten oder Almanachdaten zu extrahieren, die von der Navigationsnachricht getragen werden, und die Höhe unter Verwendung der Ephemeridendaten oder Almanachdaten und einer Position des GNSS-Empfängers zu berechnen.

9. GNSS-Empfänger nach einem der vorstehenden Ansprüche, wobei mindestens einige der Parameter relativ zu den Eingaben eines statistischen Ausbreitungskanalmodells durch Mittel (303) bereitgestellt werden, die konfiguriert sind, einen Ausbreitungskanalzustand zu bestimmen.

10. GNSS-Empfänger nach Anspruch 9, wobei die Mittel zum Bestimmen eines Ausbreitungskanalzustands eine Verarbeitungseinheit umfassen, die konfiguriert ist, eine Träger-über-Rauschen-Messung des empfangenen Signals zu messen und die Träger-über-Rauschen-Messung mit einem Schwellenwert zu vergleichen, um einen Ausbreitungskanalzustand zu bestimmen.

11. Verfahren zum Berechnen von LLRs in einem GNSS-Empfänger (300), der konfiguriert ist, ein GNSS-Signal von einem Satelliten zu empfangen, wobei die LLRs Eingaben für einen Kanaldecodierer (134) sind, das Verfahren umfassend die folgenden Schritte:

- Bestimmen von Parametern relativ zu Eingaben eines statistischen Ausbreitungskanalmodells (401), wobei das statistische Ausbreitungskanalmodell ein Prieto-Kanalmodell oder ein Perez-Fontan-Kanalmodell ist,
- Berechnen einer statistischen Kanaldämpfung aus dem statistischen Ausbreitungskanalmodell (402) unter Verwendung der bestimmten Parameter, und
- Berechnen der LLRs (403) aus einer an das statistische Ausbreitungskanalmodell eingerichteten Erkennungsfunktion unter Verwendung der im vorherigen Schritt berechneten statistischen Kanaldämpfung,

das Verfahren ferner umfassend die folgenden Schritte:

- Bereitstellen, durch Mittel (301), die konfiguriert sind, einen Typ der Ausbreitungsumgebung aus einer Vielzahl von möglichen Ausbreitungsumgebungen zu bestimmen, mindestens einiger der Parameter relativ zu den Eingaben eines statistischen Ausbreitungskanalmodells,
- Aufnehmen eines Bildes des Himmels durch einen Sichtsensor, der das Mittel zum Bestimmen eines Typs der Ausbreitungsumgebung umfasst,
- Bestimmen, durch eine dem Sichtsensor zugehörige Verarbeitungseinheit, eines Verhältnisses von freiem Himmel in dem Bild des Himmels, und
- Wählen, durch die Verarbeitungseinheit, eines Typs der Ausbreitungsumgebung aus einem Satz von Ausbreitungsumgebungen durch Vergleichen des Verhältnisses des freien Himmels mit einem oder mehreren Schwellenwerten.

**Revendications**

1. Récepteur GNSS (300) configuré pour recevoir un signal GNSS d'un satellite, ledit récepteur GNSS comprenant un décodeur de canal (134) configuré pour décoder des informations portées par le signal GNSS, le récepteur GNSS étant en outre configuré pour :

   - déterminer des paramètres relatifs à des entrées d'un modèle de canal de propagation statistique (301, 302, 303), le modèle de canal de propagation statistique étant un modèle de canal de Prieto ou un modèle de canal de Perez-Fontan,
   - calculer une atténuation de canal statistique à partir dudit modèle de canal de propagation statistique (310) en utilisant les paramètres déterminés,
   - calculer des LLR à partir d'une fonction de détection (333) adaptée au modèle de canal de propagation statistique, en utilisant l'atténuation de canal statistique calculée, et
   - utiliser lesdits LLR pour alimenter le décodeur de canal,

   le récepteur GNSS comprenant en outre des moyens (301) configurés pour déterminer un type d'environnement de propagation à partir d'une pluralité d'environnements de propagation possibles et configurés pour fournir au moins certains des paramètres relatifs à des entrées d'un modèle de canal de propagation statistique,

   les moyens de détermination d'un type d'environnement de propagation comprenant un capteur de vision configuré pour prendre une image du ciel,

   le récepteur GNSS comprenant en outre une unité de traitement associée au capteur de vision et configurée pour :

      - déterminer un rapport de ciel clair dans l'image du ciel, et
      - choisir un type d'environnement de propagation parmi un ensemble d'environnements de propagation en comparant le rapport de ciel clair à un ou plusieurs seuils.

2. Récepteur GNSS selon la revendication 1, dans lequel le modèle de canal de propagation statistique est sélectionné en tenant compte des paramètres (301, 303) relatifs à des entrées d'un modèle de canal de propagation statistique.

3. Récepteur GNSS selon l'une des revendications précédentes, dans lequel le modèle de canal de propagation statistique est un modèle de canal de Prieto, et dans lequel les LLR sont calculés par la fonction de détection comme :

$$LLR_{Prop\_channel}(i)$$

$$= log\left(\frac{\int_0^{+\infty}\left(e^{\frac{-(y(i)-a_{channel})^2 a_{channel}}{2\sigma_{n_I}^2}}e^{-\frac{(a_{channel}^2+z^2)}{2b_0}}I_0\left[\frac{za_{channel}}{b_0}\right]\right)da_{channel}}{\int_0^{+\infty}\left(e^{\frac{-(y(i)+a_{channel})^2 a_{channel}}{2\sigma_{n_I}^2}}e^{-\frac{(a_{channel}^2+z^2)}{2b_0}}I_0\left[\frac{za_{channel}}{b_0}\right]\right)da_{channel}}\right)$$

où :

   - z est l'amplitude de composante de signal direct,
   - $b_0$ est la puissance multivoie moyenne par rapport à un signal direct non bloqué,
   - $I_0\left[\frac{za_{channel}}{b_0}\right] = \int_0^{\pi}e^{\frac{za_{channel}}{b_0}cos\vartheta}d\vartheta$ est une fonction de Bessel modifiée,
   - $\sigma_{n_I}$ est l'écart type de $n_I$, $n_I$ étant le bruit blanc gaussien additif normalisé à la sortie d'un corrélateur (132),
   - $a_{channel}$ est l'atténuation de canal
   - $y(i) = x(i)R[\varepsilon_\tau(i)]a_{channel}(i)\,cos\,(\varepsilon_\varphi(i)) + n_I(i)$, x étant le symbole émis, y étant le symbole reçu, R étant la fonction d'autocorrélation du code d'étalement, $\varepsilon_\tau$ étant l'erreur d'estimation de retard de code résultant des corrélations

dans le désétalement, $\varepsilon_\varphi$ est l'erreur de phase entre le signal reçu et le signal utilisé pour les corrélations dans le désétalement.

4. Récepteur GNSS selon l'une des revendications 1 à 3, dans lequel les moyens de détermination d'un type d'environnement de propagation comprennent un module configuré pour recevoir un signal non GNSS ayant un identifiant, associé à une base de données fournissant une correspondance entre l'identifiant et un type d'environnement de propagation.

5. Récepteur GNSS selon l'une des revendications 1 à 4, dans lequel les moyens de détermination d'un type d'environnement de propagation comprennent une base de données configurée pour fournir une correspondance entre un type d'environnement de propagation et une position du récepteur GNSS.

6. Récepteur GNSS selon l'une des revendications précédentes, dans lequel au moins certains des paramètres relatifs à des entrées d'un modèle de canal de propagation statistique sont fournis par des moyens (302) configurés pour déterminer une élévation du satellite.

7. Récepteur GNSS selon la revendication 6, dans lequel les moyens de détermination d'une élévation du satellite comprennent une antenne réseau associée à une unité de traitement configurée pour déterminer une direction d'arrivée à partir du signal reçu sur les divers réseaux de l'antenne.

8. Récepteur GNSS selon la revendication 6, dans lequel les moyens de détermination d'une élévation du satellite comprennent une unité de traitement configurée pour extraire une position du satellite à partir de données d'éphémérides ou de données d'almanach portées par le message de navigation, et pour calculer l'élévation en utilisant lesdites données d'éphémérides ou lesdites données d'almanach et une position du récepteur GNSS.

9. Récepteur GNSS selon l'une des revendications précédentes, dans lequel au moins certains des paramètres relatifs à des entrées d'un modèle de canal de propagation statistique sont fournis par des moyens (303) configurés pour déterminer un état de canal de propagation.

10. Récepteur GNSS selon la revendication 9, dans lequel les moyens de détermination d'un état de canal de propagation comprennent une unité de traitement configurée pour mesurer une mesure de porteuse sur bruit du signal reçu, et pour comparer ladite mesure de porteuse sur bruit à un seuil pour déterminer un état de canal de propagation.

11. Procédé de calcul de LLR dans un récepteur GNSS (300) configuré pour recevoir un signal GNSS d'un satellite, les LLR étant des entrées à un décodeur de canal (134), le procédé comprenant les étapes :

  - de détermination de paramètres relatifs à des entrées d'un modèle de canal de propagation statistique (401), le modèle de canal de propagation statistique étant un modèle de canal de Prieto ou un modèle de canal de Perez-Fontan,
  - de calcul d'une atténuation de canal statistique à partir dudit modèle de canal de propagation statistique (402) en utilisant les paramètres déterminés, et
  - de calcul desdits LLR (403) à partir d'une fonction de détection adaptée au modèle de canal de propagation statistique, en utilisant l'atténuation de canal statistique calculée dans l'étape précédente,

le procédé comprenant en outre les étapes :

  - de fourniture, par des moyens (301) configurés pour déterminer un type d'environnement de propagation à partir d'une pluralité d'environnements de propagation possibles, d'au moins certains des paramètres relatifs à des entrées d'un modèle de canal de propagation statistique,
  - de prise d'une image du ciel par un capteur de vision compris dans les moyens de détermination d'un type d'environnement de propagation,
  - de détermination, par une unité de traitement associée au capteur de vision, d'un rapport de ciel clair dans l'image du ciel, et
  - de choix, par l'unité de traitement, d'un type d'environnement de propagation parmi un ensemble d'environnements de propagation en comparant le rapport de ciel clair à un ou plusieurs seuils.

FIG.1

Prior Art

FIG.2

EP 3 544 248 B1

FIG.3

Determining parameters relative to a statistical propagation channel model — 401

Computing a statistical channel attenuation — 402

Computing LLRs from a detection function adapted to the propagation channel model using the computed attenuation — 403

# FIG.4

# EP 3 544 248 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Analysis and Improvement of GNSS Navigation Message Demodulation Performance in Urban Environments. *Signal and Image Processing, INP Toulouse*, 2015
- **MARION ROUDIER ; THOMAS GRELIER ; LIONEL RIES ; CHARLY POULLIAT ; MARIE-LAURE BOUCHERET et al.** Opti-mizing GNSS Navigation Data Message Decoding in Urban Environment. *IEEE/ION PLANS*, 2014
- *Position Location and Navigation Symposium*, May 2014, 581-588

- **R. PRIETO-CERDEIRA ; F. PÉREZ FONTÁN ; P. BURZIGOTTI ; A. BOLEA ALAMAÑAC ; I. SANCHEZ LAGO**. Versatile two-state land mobile satellite channel model with first application to DVB-SH analysis. *Int. J. Satell. Commun.Netw.*
- **ATTIA et al.** Image analysis based real time detection of satellites reception state. *13th international IEEE annual conference on Intelligent Transportation Systems*, 19 September 2010, 1651-1656